Europäisches Patentamt

European Patent Office

Office européen des brevets

(11) Veröffentlichungsnummer: **0 200 820**
**B1**

(12) **EUROPÄISCHE PATENTSCHRIFT**

(19)

(45) Veröffentlichungstag der Patentschrift:
**30.03.88**

(21) Anmeldenummer: **85200701.2**

(22) Anmeldetag: **03.05.85**

(51) Int. Cl.⁴: **F 28 G  1/12, F 17 D  3/08**

(54) Schleuse zum Auffangen kugelförmiger Reinigungskörper.

(43) Veröffentlichungstag der Anmeldung:
**12.11.86 Patentblatt 86/46**

(45) Bekanntmachung des Hinweises auf die Patenterteilung:
**30.03.88 Patentblatt 88/13**

(84) Benannte Vertragsstaaten:
**DE FR GB IT SE**

(56) Entgegenhaltungen:
**CH - A - 462 566**
**DE - B - 1 238 939**
**DE - C - 3 218 386**
**DE - C - 3 316 022**
**FR - A - 1 054 955**
**US - A - 4 351 079**

(73) Patentinhaber: **GEA Energiesystemtechnik GmbH & Co.,**
**Südstrasse 48, D-4690 Herne 2 (DE)**

(72) Erfinder: **Borchert, Werner, Stammsberg 17,**
**D-4330 Mülheim /Ruhr (DE)**

(74) Vertreter: **Ackmann, Günther, Dr.-Ing.,**
**Claubergstrasse 24 Postfach 10 09 22,**
**D-4100 Duisburg 1 (DE)**

ACTORUM AG

## Beschreibung

Die Erfindung betrifft eine Schleuse zum Auffangen kugelförmiger, aus Schaumgummi bestehender Reinigungskörper, die diskontinuierlich durch das Kühlwasser eines Röhrenwärmetauschers o. dgl. geführt werden und die aus einem zylindrischen Gehäuse besteht, das durch ein Sieb in zwei Kammern unterteilt ist und an welches ein Zuleitungsrohr, ein Ableitungsrohr, ein Entwässerungsrohr und ein Spülrohr anschliessen, die jeweils mit einem Absperrorgan versehen sind.

Zur Reinigung der Rohre wassergekühlter Röhrenwärmetauscher o. dgl. werden in bekannter Weise kugelförmige Reinigungskörper aus Schaumgummi o. dgl., deren Durchmesser etwas über dem Innendurchmesser der Rohre liegt, in das Kühlwasser eingepumpt und durch die Rohre gedrückt. Nach Verlassen des Röhrenwärmetauschers werden diese aus dem Kühlwasser mittels einer Siebvorrichtung abgeschieden und im Kreislauf wieder dem dem Röhrenwärmetauscher zuströmenden Kühlwasser zugeleitet. Da die Reinigungskörper durch Abrieb einem Verschleiss ausgesetzt sind, müssen sie bei einer entsprechenden Verringerung ihres Durchmessers aus dem Kreislauf entfernt und durch neue Reinigungskörper ersetzt werden. Hierfür ist aus der DE-B-12 38 939 eine im Kreislauf angeordnete Fangschleuse bekannt, bei der ein zylinderförmiges Gehäuse durch ein zylinderförmiges Sieb in eine innere zylinderförmige Kammer, an welche ein Zuleitungsrohr und ein Ableitungsrohr anschliessen, und in eine äussere ringförmige Kammer unterteilt ist, an welche ein Entwässerungsrohr und ein Spülrohr anschliessen. Den an die beiden Kammern radial angeschlossenen Rohren ist je ein Ventil zugeordnet, die derart gesteuert werden, dass die Reinigungskörper durch das geöffnete Zuleitungsrohr in die innere zylinderförmige Kammer strömen, dort vom Sieb eingefangen werden, während das als Trägerstoff dienende Wasser durch das Sieb in die ringförmige Kammer strömt und über das ebenfalls geöffnete Entwässerungsrohr abgeführt wird. Sollen die im Sieb eingefangenen Reinigungskörper in den Wasserkreislauf eingeschleust werden, werden umgekehrt die Ventile des Ableitungs- und Spülrohres geöffnet, so dass der ringförmigen Kammer Spülwasser zugeführt wird, welches die Reinigungskörper aus der inneren Kammer in das Ableitungsrohr drückt. Sind alle vier Ventile geschlossen, kann das Gehäuse geöffnet werden, um die im inneren Sieb enthaltenen Reinigungskörper herauszunehmen, zu sortieren und bedarfsweise die in ihrem Durchmesser zu stark verringerten Reinigungskörper durch neue zu ersetzen. Es werden mithin vier Absperrorgane benötigt, deren Öffnen und Schliessen zum Zwecke des Durchflusses oder des Fangens oder des Kontrollierens der Reinigungskörper funktionsgerecht zu steuern ist, wozu in der Regel aufwendige elektronische Steuerschaltungen und eine entsprechende Anzahl Steuermotoren erforderlich sind. Die in der Praxis verwendeten Kugelhähne verschleissen schnell und dichten dann nicht mehr ausreichend ab.

Bei der Ausführung nach der DE-C-32 18 386 sind in einem zylindrischen Gehäuse durch mehrere, um die Gehäuseachse rotierende Trennwände Kammern gebildet, die durch eine quer zu den Trennwänden und der Gehäuseachse verlaufende Siebplatte in zwei Kammergruppen unterteilt sind, von denen die eine Kammergruppe die Reinigungskörper aufnimmt. An den Enden des zylindrischen Gehäuses ist für jede Kammergruppe ein Zuleitungs- und ein Ableitungsrohr angeschlossen. Die Kammern werden abwechselnd in die mit dem Röhrenwärmetauscher verbundene Kühlwasserzuleitung bzw. Kühlwasserableitung gedreht. Diese Ausführung ist umständlich im Aufbau und wegen der drehenden Kammern sehr störanfällig. Um einen Kurzschluss des Wasserkreislaufes in der Schleuse zu verhindern, sind mehrere Zwischenkammergruppen erforderlich.

Weiterhin ist es bekannt, in die Zu- und Ableitungsrohre von Oberflächenkondensatoren oder Oberflächenwärmetauschern ein mit Absperrklappen versehenes Kastengehäuse einzubauen. Bei der aus der CH-A-462 566 bekannten Ausführung sind einer Steuerwelle zwei Absperrklappen zugeordnet, die mit je einem im Kastengehäuse angebrachten Klappensitz zusammenwirken. Durch Verbindung von zwei oder mehreren Absperrklappenpaaren können zwei oder mehrere Verteilerrohre wechselweise an ein Zuflussrohr angeschlossen werden. Für Schleusen zum Auffangen kugelförmiger Reinigungskörper sind diese Absperrklappen jedoch nicht geeignet.

Demgegenüber liegt der Erfindung die Aufgabe zugrunde, eine Schleuse der gattungsgemässen Art derart auszubilden, dass die Zu- und Ableitungen auf einfachere Weise funktionsgerecht geöffnet bzw. abgesperrt werden und eine verbesserte Abdichtung durch die Absperrorgane erzielt wird.

Diese Aufgabe wird erfindungsgemäss dadurch gelöst, dass das Sieb eine rechtwinklig zur Längsachse des Gehäuses verlaufende, kreisförmige Siebplatte ist, das Entwässerungsrohr mit einem Stutzen in die eine Kammer und das Zuleitungsrohr, Ableitungsrohr und Spülrohr mit je einem Stutzen in die andere Kammer radial hineinragen, und dass im Gehäuse zwei von aussen verdrehbare Wellen angeordnet sind, welche jeweils zwei gegen die Enden der beiden oberen bzw. unteren Stutzen anstellbare Absperrklappen aufweisen.

Diese Ausbildung hat den Vorteil, dass zum Öffnen und Schliessen der Zuleitungs- und Ableitungsrohre nur zwei Steuerorgane erforderlich sind und somit der Aufwand für die Mechanik und die elektrische Schaltung erheblich verringert wird. Die Absperrklappen werden etwa senkrecht gegen die Öffnungen angestellt, so dass ohne Rutschbewegung beim Schliessen eine besonders wirkungsvolle Abdichtung erzielt wird. Durch nur zwei Stellungen der beiden Wellen lassen sich die drei Betriebsstellungen der Schleuse einstellen. In der Fangstellung sind die beiden oberen Stutzen offen, so dass die durch das Zuleitungsrohr zugeführten Reinigungskörper in der unteren Kammer bei geschlossenen unteren Stutzen eingefangen werden; das Transportwasser strömt dabei durch die Siebplatte in die obere Kammer und wird über das Entwässerungsrohr abgeleitet. In der Aufbewahrungsstellung sind alle vier Stutzen geschlossen; in dieser Schliessstellung kann der Inhalt der Schleusenkammer durch einen Kontrollstutzen o. dgl. auch bedarfsweise inspiziert werden. Für den Reinigungszyklus werden die beiden unteren Stutzen mittels der unteren Welle geöffnet, so dass im Bypass Kühlwasser durch die untere Schleusenkammer strömt und die Reinigungskörper gewissermassen in die Kühlwasserleitung spült. Sobald die Reinigungskörper herausgespült sind, wird die Schleuse in die Fangstellung gebracht, so dass die nach einer bestimmten Umlaufzeit wieder zugeführten Reinigungskörper erneut abgefangen werden.

Für eine besonders dichte Anlage der Absperrklappen gegen die Enden der Stutzen verläuft deren Dichtungsrand etwa um 45° zur Längsachse des betreffenden Stutzens und die Öffnungen der jeweils einer Welle zugehörigen Stutzen weisen in die gleiche Drehrichtung. Weiterhin sind die Absperrklappen jeweils auf einem an der betreffenden Welle befestigten Dreharm derart angebracht, dass sie in einer bestimmten Drehrichtung der betreffeden Welle dicht gegen den Dichtungsrand des zugehörigen Stutzens anliegen. Die beiden oberen Stutzen bzw. die beiden unteren Stutzen und die zugehörigen Absperrklappen sind jeweils einander diametral gegenüberliegend am Gehäuse bzw. an der betreffenden Welle angeordnet. Zur Steuerung der beiden Wellen können diese mit je einem Stellmotor ausgerüstet sein, welche die betreffende Welle bzw. Absperrklappe in die beiden Funktionsstellungen bringt.

Ein Ausführungsbeispiel der Erfindung ist in der Zeichnung dargestellt. Es zeigt:

Fig. 1 eine Einrichtung zum zyklischen Einleiten und Abscheiden kugelförmiger Reinigungskörper in den bzw. aus dem Kühlwasserstrom eines Röhrenwärmetauschers in einer schematischen Darstellung,

Fig. 2 die der Einrichtung nach Fig. 1 zugehörige Schleuse in einem Längsschnitt und einem grösseren Massstab, und

Fig. 3 den Gegenstand der Fig. 2 in einem Querschnitt.

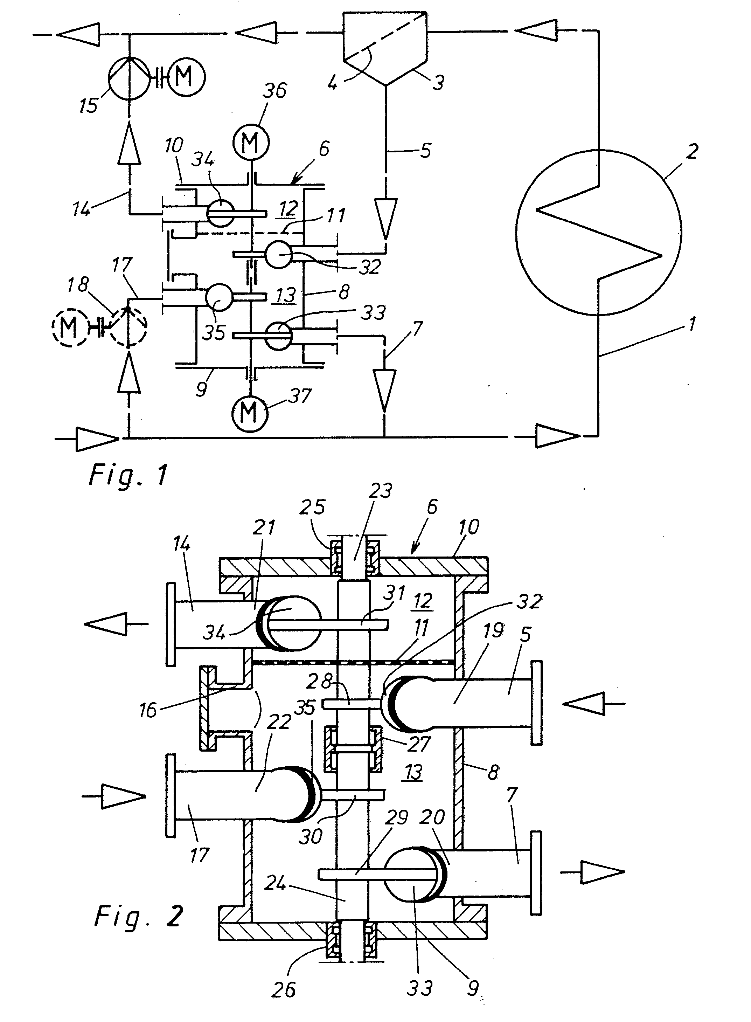

Wie Fig. 1 zeigt, wird Kühlwasser durch eine aus Kühlwasserrohren bestehende Kühlwasserleitung 1 mittels einer Kühlwasserpumpe durch einen Röhrenwärmetauscher 2 geführt. Zur Reinigung der Rohre des Röhrenwärmetauschers 2 werden elastisch verformbare, kugelförmig ausgebildete Reinigungskörper aus Gummi oder Kunststoff, deren Durchmesser etwas über dem Innendurchmesser der Rohre liegt, in bestimmten Zeitabständen in das Kühlwasser eingeleitet und durch die Rohre gedrückt. Nach Verlassen des Röhrenwärmetauschers 2 werden sie mittels einer Siebvorrichtung 3 aus dem Hauptstrom des Kühlwassers abgeschieden und über ein Rohrleitungssystem im Kreislauf zyklisch wieder in den Hauptstrom eingeleitet. Die mit dem Sieb 4 der Siebvorrichtung 3 aus dem Kühlwasser abgeschiedenen Reinigungskörper werden zusammen mit einem kleinen Teilstrom über ein Zuleitungsrohr 5 einer Schleuse 6 zugeführt, dort angesammelt und aufbewahrt und nach einer bestimmten Zeit zyklisch bzw. intermittierend wieder in die Kühlwasserleitung 1 eingespeist.

Die Schleuse 6 besteht aus einem zylindrischen Gehäuse 8, das mit einer Bodenplatte 9 und einem Deckel 10 versehen ist. Das Gehäuse 8 ist durch eine Siebplatte 11 in eine etwas kleinere obere Kammer 12 und eine etwas grössere untere Kammer 13 unterteilt. Während an die obere Kammer 12 ein Entwässerungsrohr 14 anschliesst, das mit einer Pumpe 15 versehen ist, mündet in die untere Kammer 13 das Zuleitungsrohr 5 und ein Spülrohr 17, das bedarfsweise mit einer Hilfspumpe 18 ausgerüstet sein kann. Ausserdem schliesst an die untere Kammer 13 ein Ableitungsrohr 7 an, das in den Hauptstrom des Kühlwassers mündet.

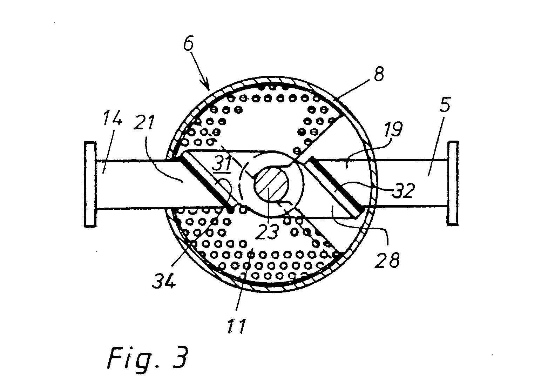

Wie die Fig. 2 und 3 zeigen, ragt das Entwässerungsrohr 14 mit einem Stutzen 21 radial in die obere Kammer 12, während das Zuleitungsrohr 5, das Ableitungsrohr 7 und das Spülrohr 17 mit je einem Stutzen 19 bzw. 20 bzw. 22 radial in die untere Kammer 13 hineinragen. Weiterhin sind zwei Wellen 23, 24 zentrisch im zylindrischen Gehäuse 8 drehbar angeordnet. Die obere Welle 23 ist in einem Lager 25 im Deckel 10, die untere Welle 24 in einem Lager 26 in der Bodenplatte 9, und beide Wellenenden sind in einem Zwischenlager 27 drehbar gelagert. An der oberen Welle 23 sind mittels je eines Dreharmes 28, 31 zwei Absperrklappen 32, 34 befestigt, die abdichtend gegen die Dichtungsränder der um etwa 45° schräg angeschnittenen Stutzen 19 bzw. 21 anstellbar sind (vgl. Fig. 3). Die Absperrklappen 32, 34 und/oder Dichtungsränder der Stutzen 19, 21 sind mit geeigneten Dichtungsringen o. dgl. ausgerüstet. In der Schliessstellung ist die obere Welle 23 im Uhrzeigersinn ganz nach rechts gedreht. In entsprechender Weise sind an der unteren Welle 24 mittels je eines Dreharmes 29, 30 zwei Absperrklappen 33, 35 angebracht, die gegen die entsprechend abgeschrägten Dichtungsränder der beiden unteren Stutzen 20, 22 anstellbar sind. Die Öffnungen der jeweils einer Welle 23 bzw. 24 zugehörigen Stutzen 19, 21 bzw. 20, 22 weisen stets in die gleiche Drehrichtung; beim Ausführungsbeispiel weisen die Öffnungen der oberen Stutzen 19, 21 in eine dem Uhrzeigersinn entgegengesetzte Drehrichtung, während die Öffnungen der unteren Stutzen 20, 22 in eine dem Uhrzeigersinn entsprechende Drehrichtung weisen. Die obere Welle 23 und die untere Welle 24 sind unabhängig voneinander durch je einen Stellmotor 36 bzw. 37 verdrehbar. Sollen die von der Siebvorrichtung 3 abgetrennten Reinigungskörper in der Schleuse 6 abgefangen und gesammelt werden, wird die obere Welle 23 nach links gedreht, so dass der Stutzen 19 des Zuleitungsrohres 5 und der Stutzen 21 des Entwässerungsrohres 14 geöffnet sind. Gleichzeitig ist die untere Welle 24 derart gedreht, dass der Stutzen 20 des Ableitungsrohres 7 und der Stutzen 22 des Spülrohres 17 geschlossen sind. Die Pumpe 15 saugt einen mit den Reinigungskörpern versetzten Teilstrom des Kühlwassers über das Zuleitungsrohr 5 an, wobei die Reinigungskörper in der unteren Kammer 13 abgefangen werden, während das Transportwasser durch die Siebplatte 11 in die obere Kammer 12 und von dort in das Entwässerungsrohr 14 strömt, das beim Ausführungsbeispiel in den Hauptstrom zurückgepumpt wird, ebenso aber auch unmittelbar als Abwasser abgeleitet werden kann. Sind alle Reinigungskörper eingefangen, werden die oberen Stutzen 19, 21 verschlossen, und die unteren Stutzen 20, 22 bleiben verschlossen. In dieser Stellung, in der alle Stutzen 19 bis 22 verschlossen sind, können die Reinigungskörper z. B. durch Öffnen eines Kontrollstutzens 16 o. dgl. inspiziert werden. Je nach einem vorgegebenen Steuerprogramm werden die Reinigungskörper für eine bestimmte Zeit in der Schleuse 6 aufbewahrt, ehe sie zyklisch bzw. intermittierend in den Hauptstrom des Kühlwassers eingespeist werden. Hierfür wird die untere Welle 24 betätigt, so dass der Stutzen 20 des Ableitungsrohres 7 und der Stutzen 22 des Spülrohres 17 geöffnet werden. Infolge des Druckgefälles in der Kühlwasserleitung 1 fliesst ein Teilstrom des Kühlwassers durch die Spülleitung 17 und spült die Reinigungskörper aus der unteren Kammer 13 durch das Ableitungsrohr 7 in die Kühlwasserleitung 1. Sollte die Druckdifferenz in der Kühlwasserleitung 1 zwischen der Anschlussstelle des Spülrohres 17 und der Einmündungsstelle des Ableitungsrohres 7 nicht ausreichen, kann eine Hilfspumpe 18 vorgesehen werden. Die Hilfspumpe 18 fördert, ebenso wie die Pumpe 15 in dem Entwässerungsrohr 14, nur Wasser, also keine Reinigungskörper. Sobald alle Reinigungskörper aus der unteren Kammer 13 herausgespült sind, werden die unteren Stutzen 20, 22 wieder geschlossen, und die oberen Stutzen 19, 21 werden geöffnet, so dass die nach einer bestimmten Durchlaufzeit eintreffenden Reinigungskörper erneut eingefangen werden. Die Betriebsstellungen der Schleuse 6 für das Ausspülen, das Einfangen und das Aufbewahren der Reinigungskörper werden in den durch Steuerprogramm vorgegebenen Zeitabschnitten zyklisch bzw. intermittierend wiederholt.

## Patentansprüche

1. Schleuse (6) zum Auffangen kugelförmiger, aus Schaumgummi bestehender Reinigungskörper, die diskontinuierlich durch das Kühlwasser eines Röhrenwärmetauschers (2) o. dgl. geführt werden, bestehend aus einem zylindrischen Gehäuse (8), das durch ein Sieb in zwei Kammern (12, 13) unterteilt ist und an welches ein Zuleitungsrohr (5), ein Ableitungsrohr (7), ein Entwässerungsrohr (14) und ein Spülrohr (17) anschliessen, die jeweils mit einem Absperrorgan versehen sind, dadurch gekennzeichnet, dass das Sieb (11) eine rechtwinklig zur Längsachse des Gehäuses (8) verlaufende kreisförmige Siebplatte (11) ist, das Entwässerungsrohr (14) mit einem Stutzen (21) in die eine Kammer (12) und das Zuleitungsrohr (5), Ableitungsrohr (7) und Spülrohr (17) mit je einem Stutzen (19, 20, 22) in die andere Kammer (13) radial hineinragen, und dass axial im Gehäuse (8) zwei von aussen verdrehbare Wellen (23, 24) angeordnet sind, welche jeweils zwei gegen die Enden der beiden oberen bzw. unteren Stutzen (19, 21 bzw. 20, 22) anstellbare Absperrklappen (32, 34 bzw. 33, 35) aufweisen.

2. Schleuse nach Anspruch 1, dadurch gekennzeichnet, dass der Dichtungsrand der Stutzen (19 bis 22) etwa um 45° zur Längsachse des betreffenden Stutzens verläuft und die Öffnungen der jeweils einer Welle (23, 24) zugehörigen Stutzen (19, 21 bzw. 20, 22) in die gleiche Drehrichtung weisen.

3. Schleuse nach Anspruch 1 oder 2, dadurch gekennzeichnet, dass die Absperrklappen (32, 34 bzw. 33, 35) jeweils auf einem an der betreffenden Welle (23 bzw. 24) befestigten Dreharm (28, 31 bzw. 29, 30) derart angebracht sind, dass sie in einer bestimmten Drehrichtung der betreffenden Welle (23 bzw. 24) dicht gegen den Dichtungsrand des zugehörigen Stutzens (19, 21 bzw. 20, 22) anliegen.

4. Schleuse nach einem der Ansprüche 1 bis 3, dadurch gekennzeichnet, dass die beiden oberen Stutzen (19, 21) bzw. die beiden unteren Stutzen (20, 22) und die zugehörigen Absperrklappen (32, 34 bzw. 33, 35) jeweils einander diametral gegenüberliegend am Gehäuse (8) bzw. an der betreffenden Welle (23 bzw. 24) angeordnet sind.

5. Schleuse nach einem der Ansprüche 1 bis 4, dadurch gekennzeichnet, dass die beiden Wellen (23, 24) mit je einem Stellmotor (36, 37) ausgerüstet sind.

## Revendications

1. Sas (6) pour recueillir des éléments sphériques de nettoyage en caoutchouc mousse, qui sont envoyés de manière discontinue dans l'eau de refroidissement d'un échangeur de chaleur tubulaire (2) ou dans un appareil analogue, constitué d'une enveloppe cylindrique (8) qui est subdivisée par un tamis en deux chambres (12, 13) et à laquelle se raccordent un conduit d'entrée (5), un conduit de sortie (7), un conduit d'évacuation de l'eau (14) et un conduit de refoulement (17), munis chacun d'un organe d'obturation, caractérisé en ce que le tamis (11) est une plaque perforée (11) circulaire, s'étendant à angle droit par rapport à l'axe longitudinal de l'enveloppe (8), le conduit d'évacuation de l'eau (14) fait saillie radialement par un raccord (21) dans l'une des chambres (12) et le conduit d'entrée (5), le conduit de sortie (7) et le conduit de refoulement (17) font saillie radialement respectivement par des raccords (19, 20, 22) dans l'autre chambre (13) et en ce que deux arbres (23, 24), qui sont susceptibles d'être entraînés en rotation de l'extérieur et qui comportent chacun deux volets d'obturation (32, 34 et 33, 35) pouvant s'appliquer sur les extrémités des deux raccords supérieurs et inférieurs (19, 21 et 20, 22), sont montés axialement dans l'enveloppe (8).

2. Sas suivant la revendication 1, caractérisé en ce que le bord d'étanchéité des raccords (19 à 22) fait un angle de 45° environ avec l'axe longitudinal du raccord concerné, et les ouvertures des raccords (19, 21 et 20, 22) correspondant à un arbre (23, 24) sont tournées dans le même sens de rotation.

3. Sas suivant la revendication 1 ou 2, caractérisé en ce que les volets d'obturation (32, 34 et 33, 35) sont montés sur un bras tournant (28, 31 et 29, 30) fixé sur l'arbre concerné (23, 24), de manière à s'appliquer, pour un sens de rotation déterminé de l'arbre (23, 24) concerné, d'une manière étanche sur le bord d'étanchéité du raccord correspondant (19, 21 et 20, 22).

4. Sas suivant l'une des revendications 1 à 3, caractérisé en ce que les deux raccords supérieurs (19, 21) et les deux raccords inférieurs (20, 22) et les volets d'obturation (32, 34 et 33, 35) correspondants sont disposés de manière diamétralement opposée sur l'enveloppe (8) et sur l'arbre (23, 24) concerné.

5. Sas suivant l'une des revendications 1 à 4, caractérisé en ce que les deux arbres (23, 24) sont munis chacun d'un moteur de commande (36, 37).

## Claims

1. A trap (6) for intercepting spherical foam rubber cleaning elements carried intermittently by the cooling water of a tubular heat exchanger (2) or the like, the trap comprising a cylindrical casing (8) subdivided by a screen into two chambers (12, 13) there being connected to the casing a feed pipe (5), a discharge pipe (7), a dewatering pipe (14) and a scavenging pipe (17) each having a shutoff element, characterised in that the screen (11) is a circular screening plate (11) extending perpendicularly to the longitudinal axis of the casing (8), the dewatering pipe (14) extends radially by way of a connecting boss (21) into one chamber (12) while the feed pipe (5), outlet pipe (7) and scavenging pipe (17) each extend radially by way of a respective connecting boss (19, 20, 22) into the other chamber (13), and two externally rotatable shafts (23, 24) are disposed axially in the casing (8) and each have two shutoff flaps (32, 34 and 33, 35 respectively) engageable with the ends of the two top and bottom bosses (19, 21 and 20, 22 respectively).

2. A trap according to claim 1, characterised in that the sealing edge of the bosses (19-22) extends at an angle of approximately 45° to the longitudinal axis of the particular boss concerned and the openings of the bosses (19, 21 and 20, 22 respectively) associated with each shaft (23, 24 respectively) extend in the same direction of rotation.

3. A trap according to claim 1 or 2, characterised in that the shutoff flaps (32, 34 and 33, 35 respectively) are each so disposed on a rotatable arm (28, 31 and 21, 30 respectively) secured to the particular shaft (23 and 24 respectively) concerned as to engage sealingly with the sealing edge of the associated boss (19, 21 and 20, 22 respectively) in a particular direction of rotation of the particular shaft concerned (23, 24 respectively).

4. A trap according to any one of claims 1-3, characterised in that the top two bosses (19, 21) and the bottom two bosses (20, 22) and the associated shutoff flaps (32, 34 and 33, 35 respectively) are in each case disposed diametrically opposite one another on the casing (8) or on the particular shaft (23, 24 respectively) concerned.

5. A trap according to any of claims 1-4, characterised in that the two shafts (23, 24) each have an adjusting motor (36, 37).

Fig. 1

Fig. 2

Fig. 3